# EUROPÄISCHE PATENTANMELDUNG

(11) **EP 2 189 267 A1**
(43) Veröffentlichungstag der Anmeldung: **26.05.2010**
(21) Anmeldenummer: 09011963.7
(22) Anmeldetag: 19.09.2009
(51) Int. Cl.: B29C 49/24, B29C 49/04, B29C 49/78

(54) **Verfahren zur Herstellung eines extrusionsblasgeformten Hohlkörpers**

(30) Priorität: 20.11.2008 DE 102008058353
(71) Anmelder: Kautex Textron Gmbh&Co. Kg, 53229 Bonn (DE)
(72) Erfinder: Cohnen, Wolfgang, 52070 Aachen (DE); Schneider, Tom, 53859 Niederkassel (DE); Guse, Christoph, 53359 Rheinbach (DE)
(74) Vertreter: Polypatent

(57) **Zusammenfassung**

Die Erfindung betrifft ein Verfahren zur Herstellung eines extrusionsblasgeformten Hohlkörpers aus thermoplastischem Kunststoff mit einem identifizierbarem Etikett (3), umfassend die Verfahrensschritte Plastifizieren von thermoplastischem Kunststoff, Extrudieren des plastifizierten Kunststoffs zu einem Vorformling (1) mittels wenigstens eines Extruders (2) und Aufweiten und Umformen des Vorformlings zu einem Hohlkörper in der ersten Hitze des Extrudats innerhalb eines mehrteiligen Blasformwerkzeugs. Das Verfahren zeichnet sich insbesondere dadurch aus, dass auf den noch warmplastischem Vorformling (1) außerhalb des Blasformwerkzeugs vor der Aufweitung und Umformung innerhalb des Blasformwerkzeugs wenigstens ein Etikett (3) aufgebracht wird.

## Beschreibung

Die Erfindung betrifft ein Verfahren zur Herstellung eines extrusionsblasgeformten Hohlkörpers aus thermoplastischem Kunststoff mit einem identifizierbarem Etikett, umfassend die Verfahrensschritte Plastifizierung von thermoplastischem Kunststoff, Extrudieren des plastifizierten Kunststoffs zu einem Vorformling mittels eines Extruders und Aufweiten und Umformen des Vorformlings zu einem Hohlkörper in der ersten Hitze des Extrudats innerhalb eines mehrteiligen Blasformwerkzeugs.

Derartige Verfahren sind im Stand der Technik bereits seit Langem bekannt. Üblicherweise werden Etiketten bei der Herstellung extrusionsblasgeformter Hohlkörper unmittelbar vor dem Aufweiten des Vorformlings innerhalb des Blasformwerkzeugs mittels einer Handhabungseinrichtung innerhalb des Formnestes des Blasformwerkzeugs ggf. in hierfür vorgesehene Ausnehmungen der Kavität platziert. Dieses Verfahren ist unter der Bezeichnung "In Mould Labeling" hinreichend bekannt. Etiketten und andere Kennzeichnungen werden dabei ähnlich wie sonstige Einlegeteile im Werkzeug platziert. Bei Aufweitung und Ausformung des schlauchförmigen Extrudats innerhalb des geschlossenen Blasformwerkzeugs verbinden sich die Teile stoffschlüssig mit der Oberfläche des noch warmplastischen Extrudats.

Als Etiketten kommen beispielsweise sogenannte RFID-Tags oder ESA-Tags in Betracht, die insbesondere im Bereich von Kunststoffverpackungen Anwendung finden. Diese Etiketten sollen eine Produktidentifizierung zwischen Verpackungen und Inhalt ermöglichen.

Oftmals wird im Handel eine Verpackung gefordert, welche eine Diebstahl- oder Fälschungssicherung oder eine automatisierte Identifikation umfasst. Sogenannte RFID(Radio Frequency Identification)- oder ESA(Electronic Surveyance Article)-Etiketten sind hierzu ein geeignetes Mittel. Diese Etiketten besitzen einen elektrischen Schwingkreis, welcher ein identifizierbares Signal ausgeben kann. Der Schwingkreis wird aktiv, wenn er von einem Lese- oder Schreibgerät angeregt wird.

Es ist bekannt, diese Schwingkreise beispielsweise in die üblichen Klebeetiketten zu integrieren. Wie vorstehend beschrieben, können diese in die Verpackung integriert sein, beispielsweise durch das bekannte "In Mould Labeling" mit der Oberfläche der Verpackung so verbunden sein, dass diese sich ohne nennenswerte Vorsprünge in die Oberfläche der Verpackung einfügen.

Aus der WO 2008/063250 ist beispielsweise ein Verfahren zur Herstellung eines Kunststoffbehälters bekannt, bei welchem ein RFID-Tag in einer Tasche des Behälters vorgesehen wird. Bei dem in der WO 2008/063250 beschriebenen Verfahren wird zunächst ein spritzgegossener Kunststoffvorformling hergestellt, der durch Streckblasformen in einem 2-teiligen Blasformwerkzeug zu einer Flasche umgeformt wird. Ein in einem Kunststoffgehäuse integrierter RFID-Tag wird mittels eines Stempels innerhalb des geschlossenen Blasformwerkzeugs so platziert, dass der innerhalb des Vorformlings aufgeweitete Vorformling sich mit dem im Bodenbereich der zu fertigenden Flasche platzierten Gehäuse einstückig verbindet. Das Verfahren beschreibt grundsätzlich das sogenannte Streck-BlasFormen (biaxiales Blasen) von spritzgegossenen Vorformlingen, welche in der zweiten Hitze umgeformt werden.

Aus dem deutschen Gebrauchsmuster DE 20 2006 010 414 U1 ist ein Behältnis zur Lagerung und zum Transport von Stück- und Schüttgütern mit einem identifizierbaren, flexiblen Etikett und einem darauf angeordneten RFID-Transponder bekannt, wobei das Behältnis sich dadurch auszeichnet, dass die Materialien von Behältnis und Etikett im Wesentlichen das gleiche Schrumpfungs-und Ausdehnungsverhalten aufweisen und dass das Etikett und das Behältnis stoffschlüssig durch einen "In Mould"-Prozess miteinander verbunden worden sind, wobei der RFID-Transponder als Microchip und Antennenstruktur auf der Rückseite des Etiketts, dem Behältnis zugewandt, angeordnet ist.

Die bekannten Verfahren sind insbesondere mit dem Nachteil behaftet, dass das Anbringen der Etiketten mittels des bekannten "In Mould"-Verfahrens die Zykluszeit bei der Herstellung negativ beeinträchtigt. Insbesondere bei der Herstellung von kleineren Flaschen oder ähnlichen Gebinden werden häufig Mehrkavitäten-Blasformwerkzeuge und eine entsprechende Anzahl von Extrusionsköpfen verwendet. Diese Blasformmaschinen sind oft auf verhältnismäßig hohe Produktausstöße ausgelegt, sodass das Vorsehen von Einlegeteilen in die Kavitäten der Blasformwerkzeuge zu einer erheblichen Beeinträchtigung des Prozesses führt.

Der Erfindung liegt die Aufgabe zugrunde, ein Verfahren der eingangs genannten Art diesbezüglich zu verbessern.

Die Aufgabe wird gelöst durch ein Verfahren zur Herstellung eines extrusionsblasgeformten Hohlkörpers aus thermoplastischem Kunststoff mit einem identifizierbarem Etikett umfassend die Verfahrensschritte Plastifizieren von thermoplastischem Kunststoff, Extrudieren des plastifizierten Kunststoffs zu einem Vorformling mittels wenigstens eines Extruders und Aufweiten und Umformen des Vorformlings zu einem Hohlkörper in der ersten Hitze des Extrudats innerhalb eines mehrteiligen Blasformwerkzeugs, wobei sich das Verfahren dadurch auszeichnet, dass wenigstens ein Etikett auf den noch warmplastischem Vorformling außerhalb des Blasformwerkzeugs vor der Aufweitung und Umformung innerhalb des Blasformwerkzeugs aufgebracht wird.

Ein wesentlicher Gesichtspunkt der Erfindung ist darin zu sehen, dass der Vorformling mit dem Etikett versehen wird, bevor der Vorformling vom Werkzeug aufgenommen wird. In der Regel wird dies unterhalb des Extrusionskopfs sein, während der Vorformling extrudiert wird. Dabei ist es möglich, sowohl einen kontinuierlichen als auch einen diskontinuierlichen Extrudatsausstoß zu realisieren.

Bei einer Variante des Verfahrens gemäß der Erfindung ist vorgesehen, dass wenigstens ein Etikett aufgebracht wird, welches zumindest teilweise aus einem mit dem Kunststoff des Hohlkörpers im Sinne einer Verschweißbarkeit kompatibeln Material besteht. Das Etikett kann beispielsweise als Transponderetikett bzw. RFID-Transponder ausgebildet sein, dessen elektronische Bauteile in einem PE- oder HDPE-Chip oder Plättchen integriert sind, der beispielsweise mit dem PE oder HDPE des zu extrudierenden Kunststoffs kompatibel ist. Auf diese Art und Weise lässt sich ein mit Transpondern versehenes Etikett nahtlos und ohne Überstände in die Oberfläche des Erzeugnisses einfügen.

Als Etikett kann ein RFID- oder ESA-Tag Anwendung finden. Selbstverständlich können auch andere Etiketten, beispielsweise Hologramme oder ähnliche Originalitätsetiketten Anwendung finden.

Das Etikett kann beispielsweise auch als Kontrollmarkierung zur Überprüfung des Fließverhaltens des Vorformlings im Werkzeug verwendet werden. In diesem Falle muss dieses nicht als RFID- oder ESA-Tag ausgebildet sein, sondern kann lediglich als optische Markierung Anwendung finden. Beispielsweise wäre es möglich, als Etikett einen gegenüber dem zu extrudierenden Material andersfarbigen Kunststoffchip vorzusehen.

Schließlich kann als Etikett ein Etikett zur Originalitätsmarkierung eines Erzeugnisses verwendet werden. Die Möglichkeit, das Etikett beispielsweise in Form eines Hologramms oder dergleichen vorzusehen, wurde bereits angesprochen.

Bei einer bevorzugten Variante des Verfahrens gemäß der Erfindung ist vorgesehen, dass eine axiale und/oder radiale Steuerung der Wanddicke des Vorformlings während der Extrusion erfolgt, wobei das Etikett an eine vorbestimmte Stelle des Vorformlings mit gegenüber einem Ausgangsquerschnitt veränderter Wandstärke aufgebracht wird.

Zweckmäßigerweise wird das Etikett mittels einer hierfür vorgesehenen Vorrichtung automatisiert aufgebracht.

Besonders vorteilhaft ist es, wenn ein Steuersignal zur Aufbringung des Etiketts von einem Programm zur Wanddickensteuerung des Vorformlings erzeugt wird.

Bei einer weiteren Variante des Verfahrens ist vorgesehen, dass das Etikett mittels einer Aufbringvorrichtung aufgebracht wird, die vorzugsweise wenigstens einen Stempel umfasst.

Das Etikett kann beispielsweise von einem Zwischenträger, vorzugsweise von einem Trägerband, auf den Vorformling aufgebracht werden. Alternativ kann das Etikett beispielsweise mittels eines Magazinspenders auf den Vorformling aufgebracht werden.

Besonders vorteilhaft ist die Verwendung einer relativ zum Vorformling bewegbaren Aufbringvorrichtung, insbesondere wenn zwischen Extrusionskopf und Werkzeug verhältnismäßig wenig Bauraum vorhanden ist.

Wird der Vorformling kontinuierlich extrudiert, ist es zweckmäßig, das Etikett dann auf einen Abschnitt oder Bereich des Vorformlings aufzubringen, wenn sich dieser Abschnitt oder Bereich zwischen einer Extrusionsdüse und einer Trennvorrichtung für den Vorformling erstreckt. Auf diese Art und Weise wird sichergestellt, dass bei kontinuierlicher Extrusion der bei der Ausformung anfallende Butzen nicht zu groß wird.

Die Erfindung wird nachstehend anhand eines in den Zeichnungen dargestellten Ausführungsbeispiels erläutert.

Es zeigen:
- Figuren 1, 1a: schematische Darstellungen, die die Aufbringung eines Etiketts auf den Vorformling mittels einer Aufbringungsvorrichtung veranschaulichen,
- Figur 2: eine Ansicht der in Figur 1 gezeigten Vorrichtung von rechts,
- Figur 3: eine alternative Ausgestaltung des Aufbringungsvorrichtung im Zusammenwirken mit dem extrudierten Vorformling,
- Figur 4: eine alternative Ausgestaltung einer Extrusionseinrichtung mit einer Aufbringungsvorrichtung gemäß der Erfindung und
- Figur 5: eine Ansicht entlang der Pfeile V-V in Figur 4.

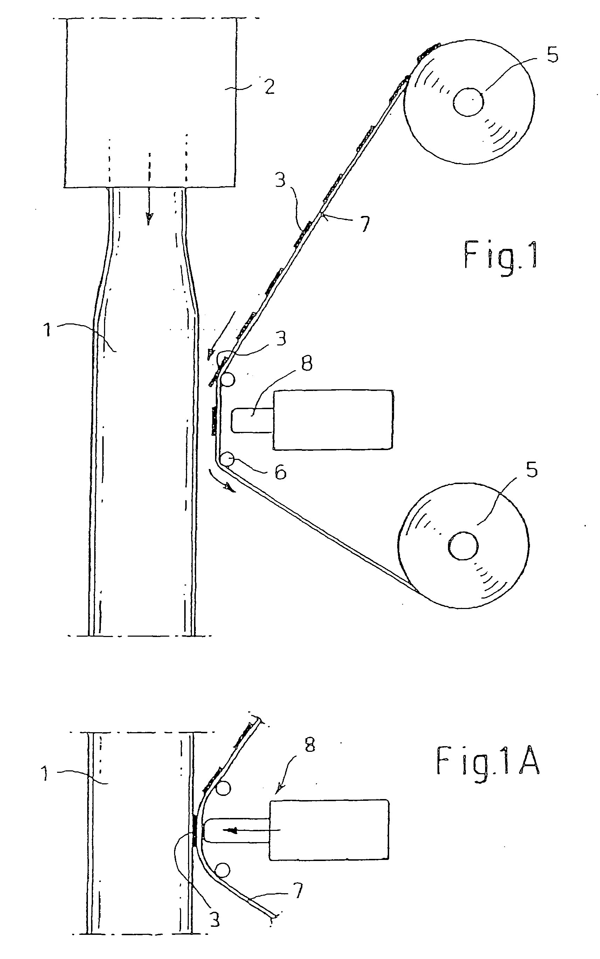

Das Verfahren gemäß der Erfindung wird zunächst unter Bezugnahme auf die Figuren 1, 1 a und 2 erläutert.

Das Verfahren umfasst die Extrusion mehrerer schlauchförmiger Vorformlinge 1 in Schwerkraftrichtung mittels mehrerer Extrusionsköpfe 2, die in den Figuren stark vereinfacht dargestellt sind. In bekannter Art und Weise wird Kunststoffgranulat in einem oder mehreren Schneckenextrudern (nicht dargestellt) plastifiziert und im Falle des erörterten Ausführungsbeispiels mehreren Extrusionsköpfen 2 zugeführt. Innerhalb der Extrusionsköpfe wird das plastifizierte Material über Ringspaltdüsen zu schlauchförmigen Vorformlingen 1 ausgestoßen. Über die Verstellung der Spaltbreite der Ringspaltdüse sowie über Zentrierung und/oder Dezentrierung eines Dorns innerhalb des Extrusionskopfs 2 wird während der Extrusion eine radiale und/oder axiale Wanddickensteuerung erzielt. Die Extrusion der Vorformlinge 1 kann kontinuierlich oder diskontinuierlich mit sogenannten Speicherköpfen erfolgen.

Die jeweils an den Extrusionsköpfen 2 hängenden Vorformlinge werden von einem oder mehreren mehrteiligen Blasformwerkzeugen unterhalb der Extrusionsköpfe 2 aufgenommen. Die Blasformwerkzeuge schließen sich um die Vorformlinge 1, nachdem diese auf eine vorgegebene Länge extrudiert bzw. ausgestoßen wurden. Die Blasformwerkzeuge sind aus Gründen der Vereinfachung in den Zeichnungen nicht dargestellt.

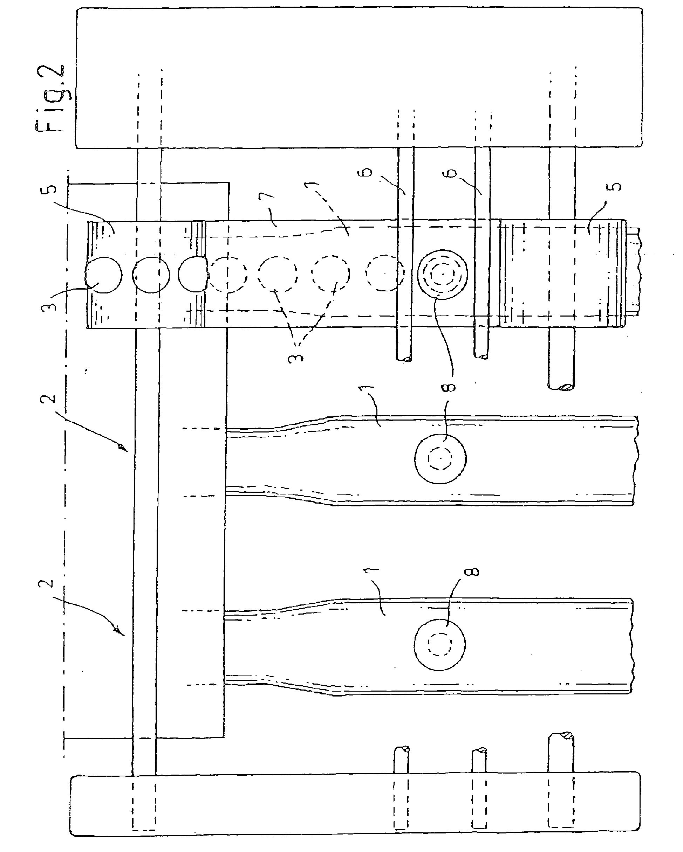

Wie dies aus Figur 2 ersichtlich ist, ist dort beispielsweise eine Blasformmaschine mit drei Extrusionsköpfen 2 dargestellt. Folglich werden drei Vorformlinge 1 extrudiert, die beispielsweise von einem Mehrkavitäten-Werkzeug mit insgesamt drei Kavitäten aufgenommen werden können.

Nachdem sich das Werkzeug bzw. die beiden Hälften des Werkzeugs um die Vorformlinge 1 geschlossen haben, werden die Vorformlinge 1 innerhalb der vom Werkzeug gebildeten Kavitäten mittels Differenzdruck aufgeweitet und umgeformt. Gleichzeitig oder anschließend werden die Vorformlinge 1 mittels einer Schlauchtrennvorrichtung zwischen den Blasformwerkzeug und den Extrusionsköpfen 2 abgetrennt.

In der Regel wird danach das Blasformwerkzeug unterhalb der Extrusionsköpfe 2 geöffnet und die fertigen Artikel werden aus dem Blasformwerkzeug entnommen, der an den Erzeugnissen vorhandene Butzen (Flash) wird entfernt.

Erfindungsgemäß ist nun vorgesehen, dass auf den Vorformling 1 außerhalb des Blasformwerkzeugs, bevor der Vorformling von dem Blasformwerkzeug aufgenommen wird, ein identifizierbares Etikett 3 aufgebracht wird, wie dies beispielsweise in Figur 1 andeutungsweise dargestellt ist. Das Etikett 3 kann beispielsweise als sogenannter RFID-Tag (Radio Frequency Identification) ausgebildet sein. Zur Aufbringung des Etiketts 3 ist nach der Erfindung eine Aufbringungsvorrichtung 4 vorgesehen, die zwischen Extrusionskopf und dem nicht dargestellten Blasformwerkzeug positionierbar ist. Die Aufbringungsvorrichtung 4 kann bezüglich der Extrusionsköpfe 2 und den Vorformlingen 1 verfahrbar bzw. bewegbar sein. Im einfachsten Fall, wie dieser beispielsweise in Figur 1 dargestellt ist, umfasst die Aufbringungsvorrichtung 4 Transport- und Spannrollen 5 sowie Umlenkrollen 6, über die ein Trägerband 7 mit den darauf angeordneten Etiketten 3 geführt ist. Mittels der Umlenkrolle 5 wird das Trägerband so umgelenkt, dass sich die Etiketten 3 im Bereich der Umlenkstelle bereits von dem Trägerband 7 lösen, wie dies andeutungsweise in Figur 1 dargestellt ist. Die Etiketten 3 können adhäsiv auf dem Trägerband 7 angeordnet sein, wobei die Haftkraft des auf dem Trägerband 7 vorgesehenen Haftvermittlers verhältnismäßig gering sein kann.

An der entsprechenden Stelle des Vorformlings 1 wird das Etikett 3 mittels eines Stempels 8, der hydraulisch oder pneumatisch betätigt sein kann, gegen den Vorformling 1 gedrückt.

Das Etikett 3 ist dabei so beschaffen, dass es mit dem Vorformling 1 eine stoffschlüssige Verbindung eingeht. Dies kann dadurch bewerkstelligt werden, dass das Etikett 3 eine mit dem Vorformling 1 kompatibeln Kunststoff umfasst, der mit dem Vorformling 1 verschmilzt. Alternativ kann das Etikett 3 mit einem Haftvermittler versehen sein, der den Stoffschluss zwischen Vorformling 1 und Etikett 3 herstellt.

Wie dies aus Figur 2 ersichtlich ist, umfasst die Aufbringungsvorrichtung 4 entsprechend der Anzahl der zu extrudierenden Vorformlinge 1 mehrere Transport- und Spannrollen 5 sowie mehrere Umlenkrollen 6, die allesamt oder teilweise elektromotorisch angetrieben sein können.

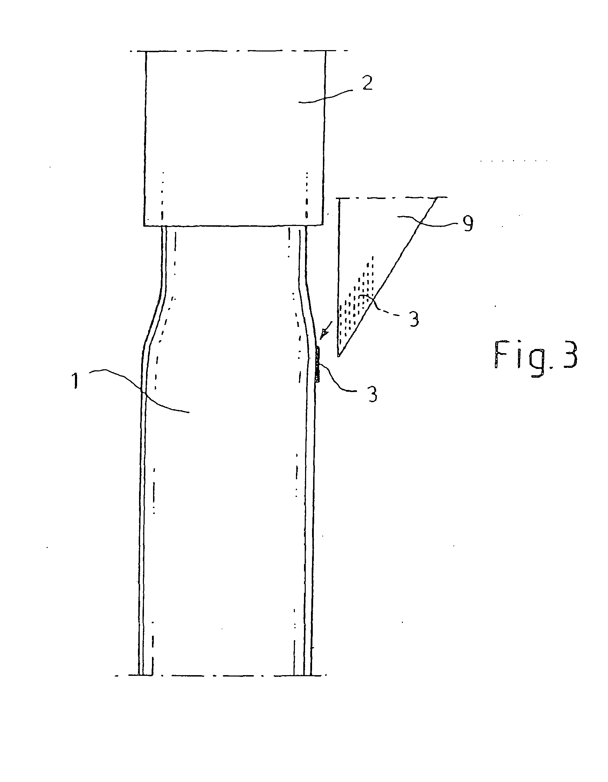

Eine alternative Vorgehensweise der Etikettierung ist in Figur 3 andeutungsweise dargestellt. Die Aufbringungsvorrichtung 4 umfasst einen oder mehrere Magazinspender 9, in welchen Etiketten 3 magaziniert sind.

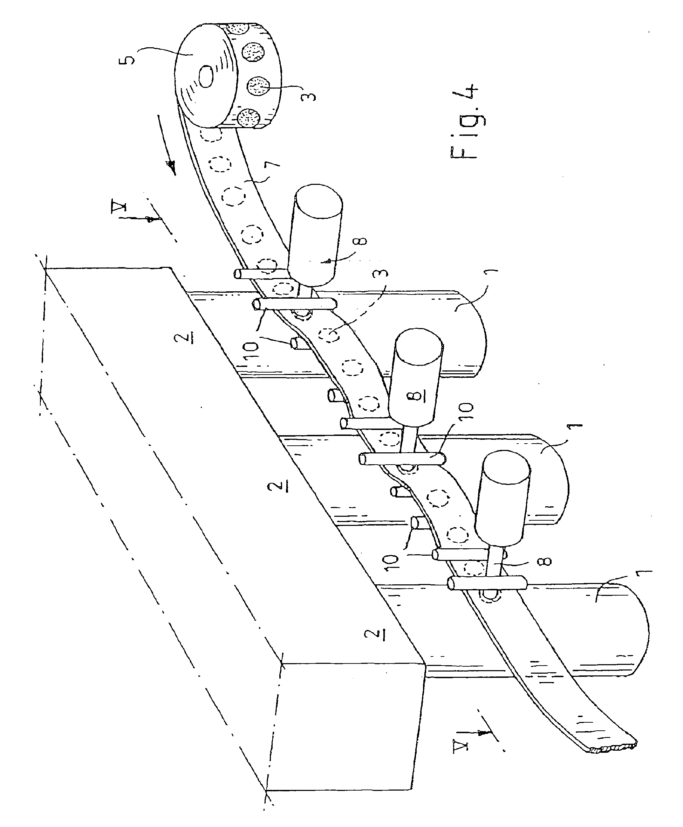

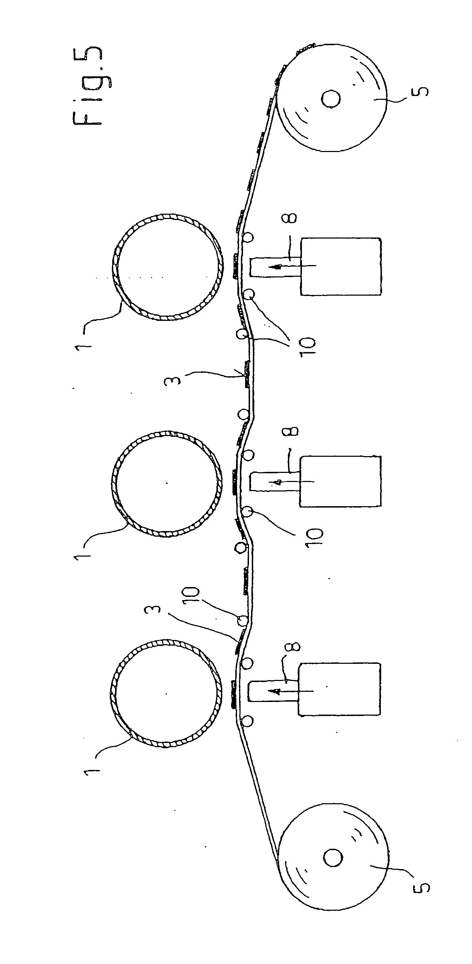

Eine weitere Variante der Aufbringungsvorrichtung ist beispielsweise in den Figuren 4 und 5 dargestellt.

Während bei dem Ausführungsbeispiel gemäß Figuren 1 und 1 a die Transport-und Spannrollen 5 bezüglich des Vorformlings 1 so angeordnet sind, dass sich das Trägerband 7 in Extrusionsrichtung erstreckt, sind hingegen die Transport-und Spannrollen 5 bei der in den Figuren 4 und 5 gezeigten Aufbringungsvorrichtung so positioniert, dass sich das Trägerband 7 etwa quer zur Extrusionsrichtung erstreckt. Das Trägerband 7 ist dabei so zwischen Umlenkfingern 10 geführt und gespannt, dass ein einfaches Ablösen der Etiketten 3 mittels der Stempel 8 möglich ist.

Diese Anordnung ist in Bezug auf den Raumbedarf zwischen den Extrusionsköpfen 2 und dem nicht dargestellten Blasformwerkzeug günstiger als die in Figur 1 gezeigte Variante der Aufbringungsvorrichtung.

Das Trägerband 7 ist auf den Transport- und Spannrollen 5 aufgewickelt und wird während des Betriebs der Aufbringungsvorrichtung 4 von einer Transport- und Spannrolle 5 auf die andere Transport- und Spannrolle 5 umgespult.

Anstelle der Aufbringung mittels Trägerband 7 oder Magazinspender 9 kann vorgesehen sein, den Stempel 8 unmittelbar jeweils mit einem Etikett 3 zu bestücken.

Nach dem erfindungsgemäßen Verfahren kann beispielsweise vorgesehen sein, dass an einer vorbestimmten Stelle des Vorformlings mittels eines Programms zur Wanddickensteuerung eine "Dünnstelle" erzeugt wird, in welche das Etikett eingesetzt wird. Über ein Steuersignal des Programms zur Wanddickensteuerung wird die Aufbringvorrichtung veranlasst, mit entsprechender "Synchronität" ein Etikett aufzubringen.

### Bezugszeichenliste

- 1: Vorformlinge
- 2: Extrusionsköpfe
- 3: Etiketten
- 4: Aufbringungsvorrichtung
- 5: Transport- und Spannrollen
- 6: Umlenkrollen
- 7: Trägerband
- 8: Stempel
- 9: Magazinspender
- 10: Umlenkfinger

## Patentansprüche

1. Verfahren zur Herstellung eines extrusionsblasgeformten Hohlkörpers aus thermoplastischem Kunststoff mit einem identifizierbarem Etikett, umfassend die Verfahrensschritte Plastifizieren von thermoplastischem Kunststoff, Extrudieren des plastifizierten Kunststoffs zu einem Vorformling und Aufweiten und Umformen des Vorformlings zu einem Hohlkörper in der ersten Hitze des Extrudats innerhalb eines mehrteiligen Blasformwerkzeugs, **dadurch gekennzeichnet, dass** wenigstens ein Etikett auf den noch warmplastischem Vorformling außerhalb des Blasformwerkzeugs vor der Aufweitung und Umformung innerhalb des Blasformwerkzeugs aufgebracht wird.

2. Verfahren nach Anspruch 1, **dadurch gekennzeichnet, dass** wenigstens ein Etikett aufgebracht wird, welches zumindest teilweise aus einem mit dem Kunststoff des Hohlkörpers im Sinne einer Verschweißbarkeit kompatiblen Material besteht.

3. Verfahren nach Anspruch 1 oder 2, **dadurch gekennzeichnet, dass** als Etikett ein RFID- oder ESA-Tag Anwendung findet.

4. Verfahren nach einem der Ansprüche 1 bis 3, **dadurch gekennzeichnet, dass** wenigstens ein Etikett als Kontrollmarkierung zur Überprüfung des Fließverhalten des Vorformlings im Werkzeug verwendet wird.

5. Verfahren nach einem der Ansprüche 1 bis 4, **dadurch gekennzeichnet, dass** wenigstens ein Etikett als Originalitätsmarkierung verwendet wird.

6. Verfahren nach einem der Ansprüche 1 bis 5, **dadurch gekennzeichnet, dass** eine axiale und/oder radiale Steuerung der Wanddicke des Vorformlings während der Extrusion erfolgt, wobei das Etikett an eine vorbestimmte Stelle des Vorformlings mit gegenüber einem Ausgangsquerschnitt veränderter Wandstärke aufgebracht wird.

7. Verfahren nach einem der Ansprüche 1 bis 6, **dadurch gekennzeichnet, dass** das Etikett einer hierfür vorgesehenen Vorrichtung automatisiert aufgebracht wird.

8. Verfahren nach einem der Ansprüche 1 bis 7, **dadurch gekennzeichnet, dass** ein Steuersignal zur Aufbringung des Etiketts von einem Programm zur Wanddickensteuerung des Vorformlings erzeugt wird.

9. Verfahren nach einem der Ansprüche 1 bis 8, **dadurch gekennzeichnet, dass** das Etikett mittels einer Aufbringvorrichtung aufgebracht wird, die vorzugsweise wenigstens einen Stempel umfasst.

10. Verfahren nach einem der Ansprüche 1 bis 9, **dadurch gekennzeichnet, dass** das Etikett von einem Zwischenträger, vorzugsweise von einem Trägerband auf den Vorformling aufgebracht wird.

11. Verfahren nach einem der Ansprüche 1 bis 10, **gekennzeichnet durch** die Verwendung einer relativ zum Vorformling bewegbaren Aufbringvorrichtung.

12. Verfahren nach einem der Ansprüche 1 bis 11, **dadurch gekennzeichnet, dass** das Etikett dann auf einen Abschnitt oder Bereich des Vorformlings aufgebracht wird, wenn dieser Abschnitt oder Bereich sich zwischen einer Extrusionsdüse und einer Trennvorrichtung erstreckt.
